# EUROPEAN PATENT SPECIFICATION

(11) **EP 1 614 374 B1**
(45) Date of publication and mention of the grant of the patent: **26.08.2009**
(21) Application number: 04726651.5
(22) Date of filing: 08.04.2004
(51) Int. Cl.: A47G 27/02, B32B 5/24, B60N 3/04, B29C 47/02, D06N 7/00

(54) **METHOD AND DEVICE FOR MANUFACTURING SOUND ABSORBING CARPET**
VERFAHREN UND VORRICHTUNG ZUR HERSTELLUNG VON SCHALLDÄMPFENDER TEPPICHWARE
PROCEDE ET DISPOSITIF POUR LA FABRICATION D'UN TAPIS ABSORBANT LES SONS

(30) Priority: 11.04.2003 JP 2003107312
(43) Date of publication of application: 11.01.2006
(73) Proprietor: Daiwa Co., Ltd., Gifu 5016064 (JP)
(72) Inventor: YAMADA, Kohei, Daiwa Co., Ltd., Gifu 5016064 (JP)
(74) Representative: Jones, Keith William
(86) International application number: PCT/JP2004/005098
(87) International publication number: WO 2004/091350

(56) References cited:
- GB-A- 2 072 578
- GB-A- 2 144 036
- JP-A- 2002 238 730
- JP-A- 2002 238 730
- JP-A- 2002 345 624
- US-A- 4 112 161
- US-A- 5 620 546

## Description

### Technical Field:

This invention generally relates to a method and an apparatus for making a noise absorbent carpet, rug or mat to be used on a vehicle floor such as a car floor, train floor or airplane floor as well as on a house floor or building floor. More particularly, this invention relates to a method and an apparatus for efficiently making a noise absorbent carpet, rug or mat which provides an excellent noise absorption or dissipation.

### Background Art:

Conventionally, the interior floor of a passenger car is covered with a carpet, which is generally comprised of a felt or non-woven fabric layer. Car mats are often used to cover such a carpet. A car mat is generally comprised of a piled non-woven fabric layer or substrate and a resinous backing layer.

Such a resinous backing layer is generally made from a synthetic resin such as vinyl chloride and intended to shield noises rather than dissipating noises. Accordingly, noises which hit the car mat from above are repulsed on the backing layer into the car.

The backing layer of a house carpet also repulses noises hitting the carpet from above into the house rather than absorbing noises.

It is to be noted that the terms "carpet", "rug" and "mat" and the verbs "absorb" , "damp" and "dissipate" are respectively interchangeably used herein to practically mean the same.

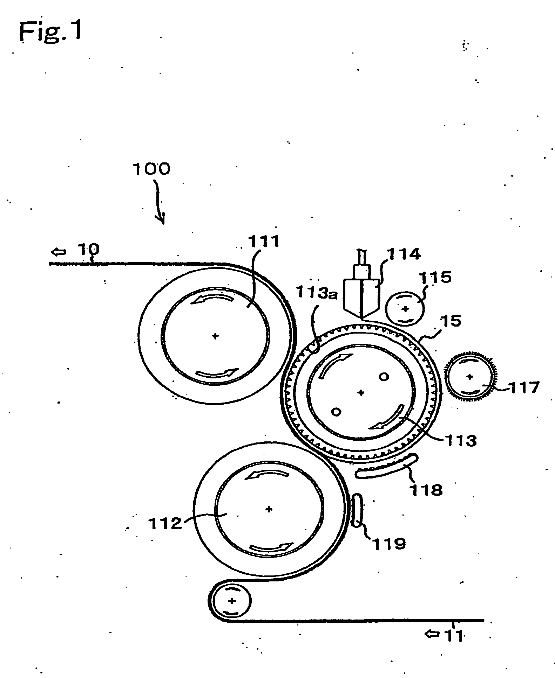

Japanese Patent Application Laid-Open Publication No.2002-238730 provides a noise absorbent carpet which is capable of excellently absorbing or dissipating noises (see Figs.1-3 of the publication).

The resinous backing layer of the noise absorbent carpet of said patent application is provided with numerous through-holes which damp noises going therethrough by dissipating the noise energies therein.

### Disclosure of the Invention:

The present invention provides a method and an apparatus for continuously and efficiently making a noise absorbent carpet, rug or mat having numerous noise damping through-holes in its backing layer.

According to the present invention, a noise absorbent vehicle carpet or mat such as a car floor carpet or mat, train floor carpet or airplane carpet as well as a noise absorbent house carpet or mat having numerous noise damping through-holes is manufactured in a continuous and efficient manner.

Claims 1 and 2 are directed to a method for making a noise absorbent carpet comprising a step of forming a backing layer (15) on a backing layer forming roll (113) by extruding a resin material onto the backing layer forming roll (113) by way of a resin extruder (114) provided relative to the backing layer forming roll (113) to form the backing layer (15) on the backing layer forming roll (113) and the concurrent steps of providing through-holes (16) in the backing layer (15) by inserting pins (113b) through the backing layer (15) whilst the backing layer (15) is on the backing layer forming roll (113) and heat-bonding a fibrous substrate (11) onto the backing layer (15) by way of a heat press roll (112) which presses the fibrous substrate (11) and the formed backing layer (15) against the backing layer forming roll (113).

This method provides improved efficiency of manufacturing a noise absorbent carpet 10 where the backing layer forming step, the through-hole perforation step and the backing layer-fibrous substrate heat-bonding step are provided in series, and the two steps of perforation and heat-bonding are concurrently provided.

Provision of the spikes 15a and the through-holes 16 to the backing layer 15 may be concurrently performed with heat-bonding of the backing layer 15 and the fibrous substrate 11 so as to further improve manufacturing efficiency.

Claim 3 is directed to the method of claim 1 further comprising the step of forming the backing layer (15) comprises the steps of forming a first backing layer (15A), forming a second backing layer (15B) and laminating the first backing layer (15A) and the second backing layer (15B) and providing the through-holes (16) in the laminated first backing layer (15A) and the second backing layer (15B), and heat-bonding the fibrous substrate (11) onto the second backing layer (15B).

This method provides continuous manufacturing steps of forming the first and second backing layers 15A and 15B, laminating the first and second backing layers 15A and 15B, perforating the first and second backing layers 15A and 15B, and heat-bonding the fibrous substrate 11 on the second backing layer 15B.

This method additionally provides concurrent forming of the first backing layer 15A and spikes 15a on the first backing layer 15A.

Claims 4 to 8 are directed to an apparatus for making a noise absorbent carpet, the apparatus comprising a backing layer forming roll (113), a resin extruder (114) provided relative to the backing layer forming roll (113) for extruding a resin material onto the backing layer forming roll (113) to form a backing layer (15) thereon, a pinned roll (113) provided to form through-holes (16) in the backing layer (15) when the backing layer (15) is on the backing layer forming roll (113), and a heat press roll (112) for heat-bonding a fibrous substrate (11) onto the backing layer (15) by pressing the fibrous substrate (11) and the backing layer (15) against the backing layer forming roll (113).

The apparatus 100 additionally includes a pinned roll 117 to provide through-holes 16 in the backing layer 15 on the rolling baking layer forming roll 113.

The apparatus 100 provides forming the backing layer 15, perforating the backing layer 15 and heat-bonding the fibrous substrate 11 onto the backing layer 15 in series.

In the apparatus 100, the backing layer forming roll 113 is provided on its surface with spike forming depressions 113a to form spikes 15a on the back side of the backing layer 15 concurrently with formation of the backing layer 15.

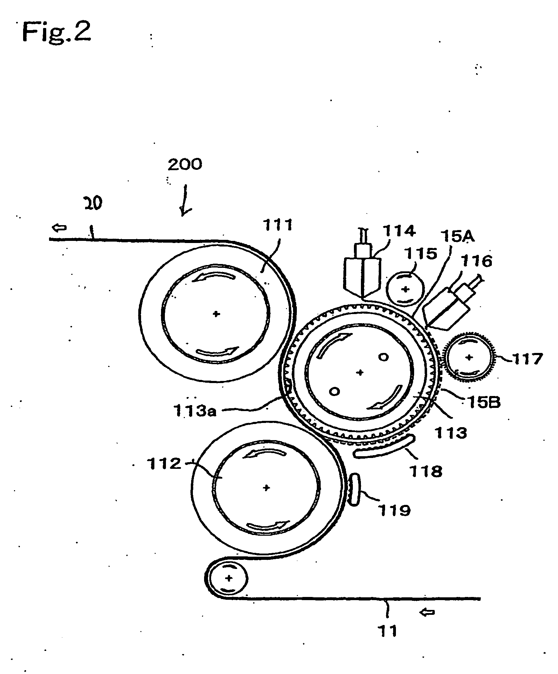

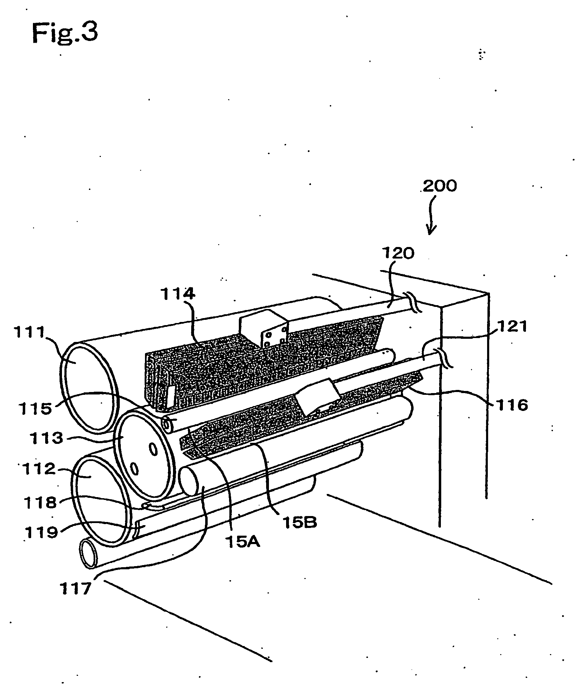

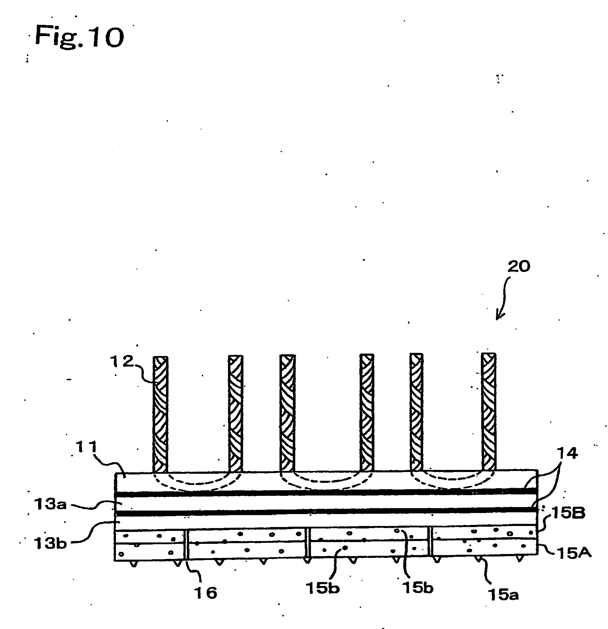

Figs.2 and 3 show an apparatus 200 which produces a noise absorbent carpet 20 as shown in Fig. 10, including an additional (second) resin extruder 116 to form an additional (second) backing layer 15B between a (first) resin extruder 114 which forms a (first) backing layer 15A and a pinned roll 117 which forms through-holes 16. Thus, formation of the backing layer 15A and the backing layer 15B, lamination of the backing layers 15A and 15B, provision of through-holes 16 in the backing layers 15A and 15B and heat-bonding of the backing layer 15B and a fibrous substrate 11 are provided continuously or in series.

As described, the apparatus 200 shown in Figs.2 and 3 produces the noise absorbent carpet 20 having two component backing layers 15A and 15B,The apparatus 200 includes two resin extruders (first and second resin extruders 114 and 116) . Formation of the first backing layer 15A and the second backing layer 15B,lamination of the first and second backing layers 15A and 15B, perforation of the first and second backing layers 15A and 15B and heat-bonding the second backing layer 15B and the fibrous substrate 11 are provided in series.

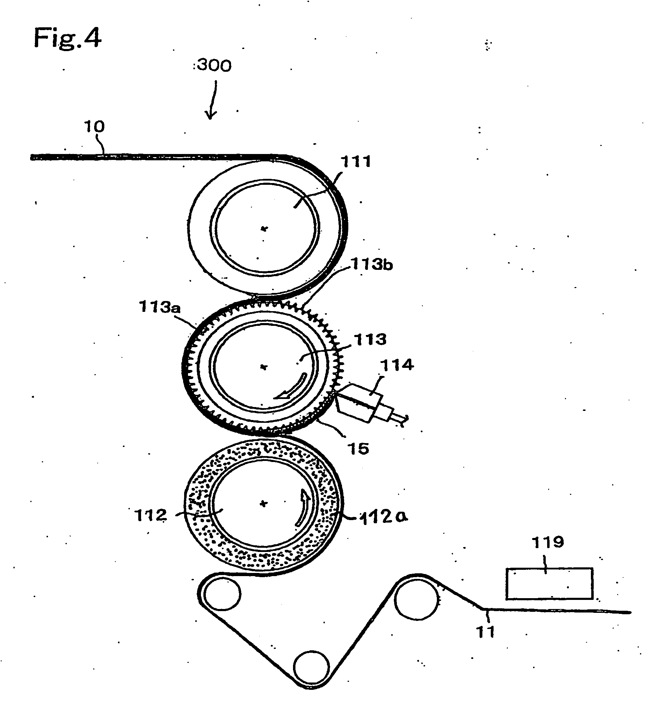

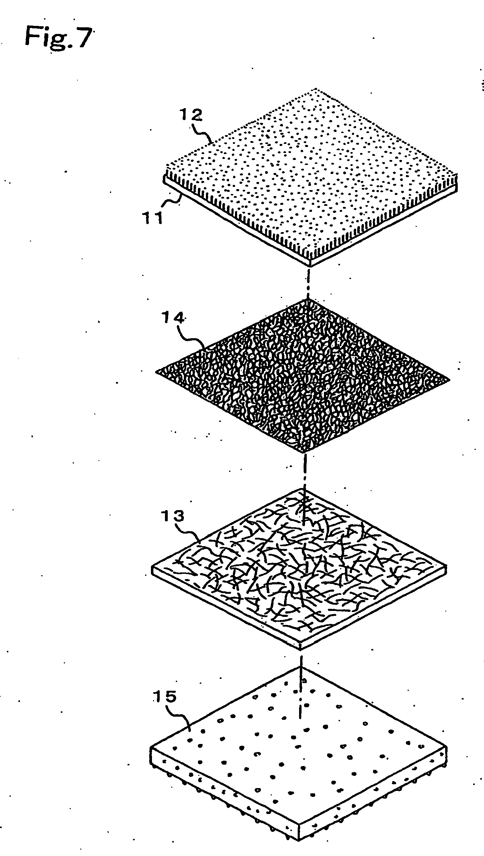

Apparatus 300 shown in Fig.4 produces a noise absorbent carpet 10 as shown in Figs. 7 to 9, where the backing layer forming roll 113 is provided with both spike forming depressions 113a and through-hole forming pins 113b such that the spikes 15a and the through-holes 16 are concurrently provided in the backing layer 15 as the backing layer 15 is pressed between the backing layer forming roll 113 and the heat press roll 112.

With the apparatus 300, formation of the backing layer 15, provision of the through-holes 16 and spikes 15a, and heat-bonding of the backing layer 15 and the fibrous substrate 11 are performed in series.

The through-holes 16 in the backing layer 15 are provided with the through-hole forming pins 113b and the spikes 16a are provided with the spike forming depressions 113a

The apparatus 300 provides efficient and speedy production of a noise absorbent carpet 10 having the though-holes 16 and the spikes 16a.

Fin.5 shows an apparatus 400 which is provided with an additional (second) resin extruder 116 to form an additional (second) backing layer 15B over the (first) backing layer 15A which is provided with a (first) resin extruder 114.

The apparatus 400 provides formation of the first backing layer 15A and the second backing layer 15B, lamination of the first and second backing layers 15A and 15B, provision of the through-holes 16 in the first and the second backing layers 15A and 15B, and heat-bonding of the second backing layer 15B and the fibrous substrate 11 in series.

The backing layer forming roll 113 of the apparatus 400 is provided with through-hole forming pins 113b and spike forming depressions 113a so as to simultaneously provide the through-holes 16 and the spikes 15a.

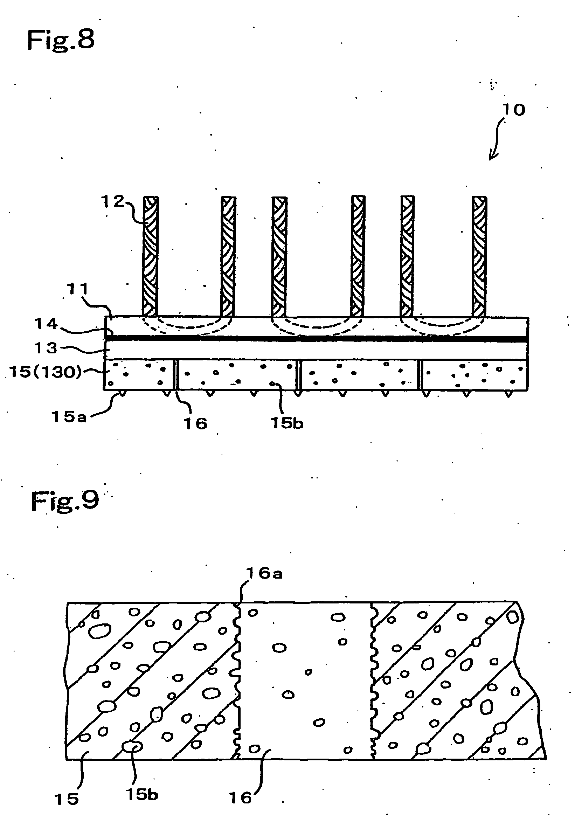

The fibrous substrate 11 may be a non-woven fabric, woven fabric, paper or their appropriate combinations. The pile 12 may be provided on the fibrous substrate 11 as shown in Figs. 8 and 10. The fibrous substrate 11 is porous and provides efficient noise dissipation by converting the noise energies into frictional heat when noises penetrate the fibrous substrate 11.

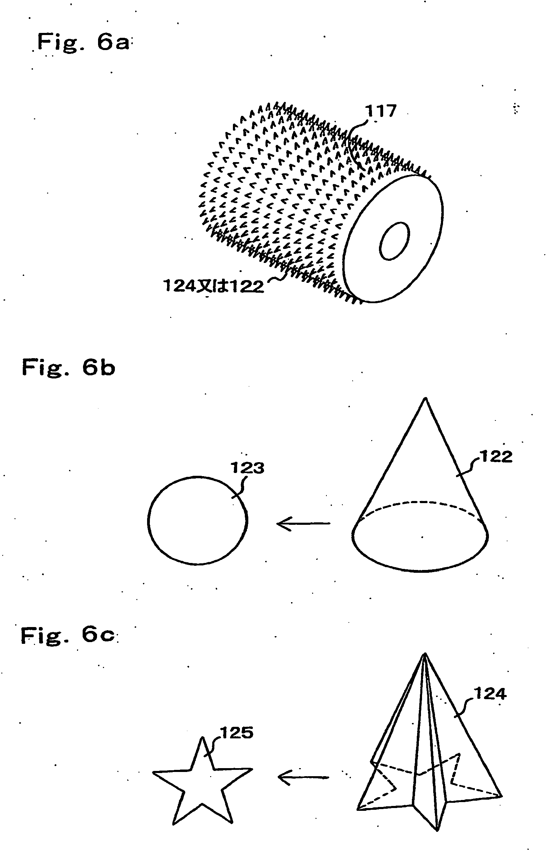

Another (second) fibrous substrate 13 may be internally provided to increase noise dissipation as shown in Fig.7-10. The second fibrous substrate 13 may be a non-woven fabric, woven fabric, paper or their appropriate combinations. The (first) fibrous substrate 11 and the second fibrous substrate 13 are bonded together with a porous adhesive sheet 14 as shown in Figs. 6-8. Together, they provide improved noise damping.

The porous adhesive sheet 14 is a net-like or web-like adhesive sheet 14. The adhesive sheet 14 may be an adhesive which forms a sheet when heated and pressed. The adhesive sheet 14 may be prepared of a hotmelt resin and a foaming agent blended therewith. The web-like adhesive sheet 14 is sandwiched between the piled first fibrous substrate 11 and the inner second fibrous substrate 13.

Fig. 10 shows a noise absorbent carpet 20, where the second fibrous substrate 13 consists of an upper component substrate 13a and a lower component substrate 13b bonded to the upper component substrate 13a with another web-like adhesive sheet (also indicated "14"). The upper and the lower component substrates 13a and 13b together with the additional web-like adhesive sheet 14 provide improved noise damping.

The adhesive sheets 14 are capable of vibration. Noises going through the adhesive sheets 14 are dissipated dynamically as the noises vibrate the adhesive sheets 14. The upper adhesive sheet 14 may additionally function to secure the pile 12 provided on the fibrous substrate 11.

A backing layer 15 of the present invention may be formed of a synthetic resin selected from styrene-butadiene-styrene copolymers, acrylonitrile-butadiene copolymers, urethane, styrene-butadiene rubber, acrylonitrile-butadiene rubber, butadiene rubber, natural rubber, isoprene rubber, and their selected blends.

The resin may contain a foaming agent selected from fatty acid soaps, sodium alkylaryl sulfonic acid, higher alcohol sodium sulfate and N-octadecyl disodium sulfosuccinic acid monoamide.

The resin may additionally include a filler, thickener and/or dispersant. Such a filler may be polyacrylic acid soda, carboxymethyl cellulose, talc, aluminum hydroxide, or antimony oxide. The thickener may be polyacrylic acid soda, carboxymethyl cellulose, polyvinyl alcohol, casein, or fermented polysaccharide. A low molecular polyacrylic soda is preferred. Such a dispersant may be tripolyphosphoric acid soda or hexametaphosphoric acid soda.

As shown in Figs.7 to 10, a noise absorbent carpet 10 or 20 is comprised of a fibrous substrate 11 and a backing layer 15 (15A and 15B) where through-holes 16 are provided. The backing layer 15 (15A, 15B) is provided on the back side of the fibrous substrate 11 to provide shape retention of the noise absorbent carpet 10 or 20 and dislocation prevention with the help of the spikes 15a.

The backing layer 15 (15A, 15B) may be made of foamed resin, preferably of a continuos bubble structure to dissipate noise energies effectively as noises hit the bubble walls.

The backing layer 15 (15A, 15B) is provided with numerous through-holes 16 toward which bubbles 16a (15a) are open (see Fig. 9) . Noises which enter the through-holes 16 hit the walls of the through-holes 16 and enter the bubbles 16a and 15b to be effectively damped.

### Brief Description of the Drawings:

FIG.1 is a schematic view of an apparatus of the present invention;
FIG.2 is a schematic view of another apparatus of the present invention;
FIG.3 is a perspective view of the apparatus of Fig.2;
FIG.4 is a schematic view of another apparatus of the present invention;
FIG.5 is a schematic view of another apparatus of the present invention;
FIG. 6a is a perspective view of a pinned roll of the present invention;
FIG.6b is an example pin and the through-hole provided with the pin;
FIG.6c is another example pin and the through-hole provided with the pin;
FIG.7 is a perspective view showing a structure of a nose absorbent carpet of the present invention;
FIG . 8 is a partial side sectional view of a piled noise absorbent carpet of the present invention;
FIG. 9 is an enlarged partial side sectional view of the backing layer of the carpet of Fig.8;
FIG.10 is an enlarged partial side sectional view of another noise absorbent carpet of the present invention;
FIG.11a shows an arrangement of through-holes; and
FIG.11b shows another arrangement of through-holes.

### Best Modes:

The present invention is described in detail hereunder using the accompanying drawings.

An apparatus of the present invention is shown in Fig.1 which produces a noise absorbent carpet as shown in Figs. 7-9. The apparatus 100 is comprised of a backing layer forming roll 113 having numerous spike forming depressions 113a over which a resin extruder 114 to provide a resin material for a backing layer 15 is provided. The apparatus 100 is further provided with a heat press roll 112 which heat-bonds a fibrous substrate 11 on the backing layer 15 between the heat press roll 112 and the backing layer forming roll 113 . The apparatus 100 also includes a draw roll 111 to draw a continuous noise absorbent carpet 10 after these manufacturing processes.

The resin material extruded from the resin extruder 114 onto the backing layer forming roll 113 is pressed with a calendar roll 115 provided in the vicinity of the resin extruder 114. The backing layer forming roll 113 is provided with spike forming depressions 113a as shown in Fig.1 to form spikes 15a on the backing layer 15.

The resin material extruded from the resin extruder 114 is heated between 10 and 50 C and is foamed to provide a porous structure.

The apparatus 100 additionally includes a pinned roll 117 which provides the backing layer 15 with through-holes 16 and a heater 118 which heats the perforated backing layer 15 to be ready for heat-bonding with a fibrous substrate 11.

The backing layer 15 is heated between 70 and 210 C with the heater 118, preferably between 70 and 150 C and rather tenderly pressed such that the bubbles or porous structure of the backing layer 15 including the through-holes 16 is not destroyed.

The fibrous substrate 11 fed on the heat press roll 112 is also heated with another heater 119 to be ready for bonding with the heated backing layer 15 between the backing layer forming roll 113 and the heat press roll 112.

The continuous noise absorbent carpet 10 is drawn onto a draw roll 111 provided downstream after those processes.

Figs.2 and 3 show another apparatus 200 to produce a noise absorbent carpet 20 as shown in Fig. 10, which is additionally comprised of a second resin extruder 116 between a calendar roll 115 and a pinned roll 117 to provide a second backing layer 15B over a first backing layer 15A provided with a first resin extruder 114. A backing layer forming roll 113 is provided with numerous spike forming depressions 113a to provide spikes 15a on the second backing layer 15B when pressed with the calendar roll 115.

The first backing layer 15A and the second backing layer 15B are heated between 100 and 220 C , depending on the kinds of the resin materials of the first and second backing layers 15A and 15B. The pressure applied onto the backing layers 15A and 15B should be controlled not to destroy the bubbles or porous structure of the backing layers 15A and 15B.

The overlapped first and second backing layers 15A and 15B are provided with through-holes 16 with the pinned roll 117.

The pinned roll 117 concurrently provides bonding of the first and second backing layers 15A and 15B.

The heater 118 heats the second backing layer 15B between 70 and 210 °C, preferably 70 and 150°C as to heat bond the second backing layer 15B and the fibrous substrate 11.

The fibrous substrate 11 on the heat press roll 112 is heated with a heater 119 to be ready for bonding with the second backing layer 15B between the heat press roll 112 and the backing layer forming roll 113.

The heat bonded noise absorbent carpet 10 is then drawn onto the draw roll 111.

Fig.4 shows another apparatus 300, a modification of the apparatus 100 or 200 of Figs.1 to 3, which produces a noise absorbent carpet 10 as shown in Fig. 7 to 9. The apparatus 300 is comprised of a resin extruder 114 to provide a resin material for a backing layer 15 to be formed on a backing layer forming roll 113, and a heat press roll 112, characterized in that the backing layer forming roll 113 is provided with through-hole forming pins 113 to form through-holes 16 in the backing layer 15.

The apparatus 300 thus extrudes a resin material from the resin extruder 114 onto the backing layer forming roll 113 which is provided with through-hole forming pins 113b over the surface thereof. The backing layer 15 is provided with through-holes 16 as pressed between the backing layer forming roll 113 and the heat press roll 112.

A heater 119 preheats the fibrous substrate 11 to be supplied onto the heat press roll 112 having an elastic outer layer 112a and the heated fibrous substrate 11 is sent to the contact portion of the heat press roll 112 and the backing layer forming roll 113 so as to be pressed and bonded with the backing layer 15.

The backing layer 15 is provided with through-holes 16 with the through-hole pins 112b as the backing layer 15 is bonded to the fibrous substrate 11.

The apparatus 300 provides the through-holes 16 with the through-hole forming pins 113b and the spikes 16a with spike forming depressions 113a provided on the backing layer forming roll 113. The resin material extruded from the resin extruder 114 onto the backing layer forming roll 113 is pressed against the fibrous substrate 11 between the forming roll 113 and the heat press roll 112, when the spikes 16a and the through-holes 16 are simultaneously provided in the backing layer 15. The backing layer 15 and the fibrous substrate 11 are also bonded together concurrently to provide a noise absorbent carpet 10, which is drawn onto the draw roll 111.

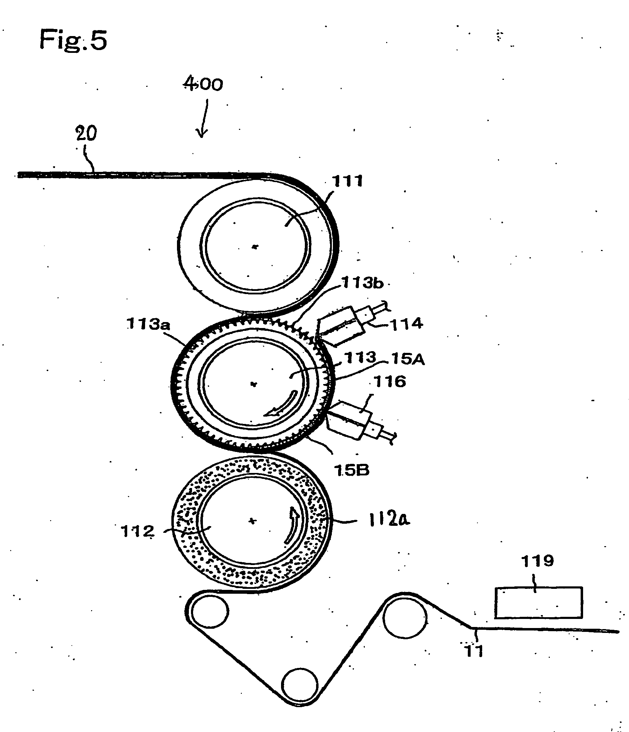

Fig. 5 shows another apparatus 400 which is a modification of the apparatus 300 and additionally includes a second resin extruder 116 to provide a second backing layer 15B on a (first) backing layer 15A provided from a (first) resin extruder 114.

A fibrous substrate 11 is fed on the heat press roll 112 having a resilient outer layer 112a to meet with the laminated first and second backing layers 15A and 15B and get heat bonded with them between the backing layer forming roll 113 and the heat press roll 112. The backing layer 15 (15A and 15B) is concurrently provided with through-holes 16.

The backing layer forming roll 113 is additionally provided with spike forming depressions 113a to provide spikes 15a on the backing layer 15. Thus, the backing layer 15 is concurrently provided with spikes 15a and through-holes 16 as the backing layer 15 is heat-bonded with the fibrous substrate 11 which is preheated with a heater 119.

The pin (122,124) to produce a through-hole 16 is described. The pin may be of any appropriate shape. An example pin 122 is shown in Fig.6b, which will provide a round through-hole 123. Another example pin 124 is shown in Fig.6c, which will provide a star-shaped through-hole 125. The size and the shape of such a pin can be selected according to the needs. The round through-hole 123 may be 1.5mm in diameter.

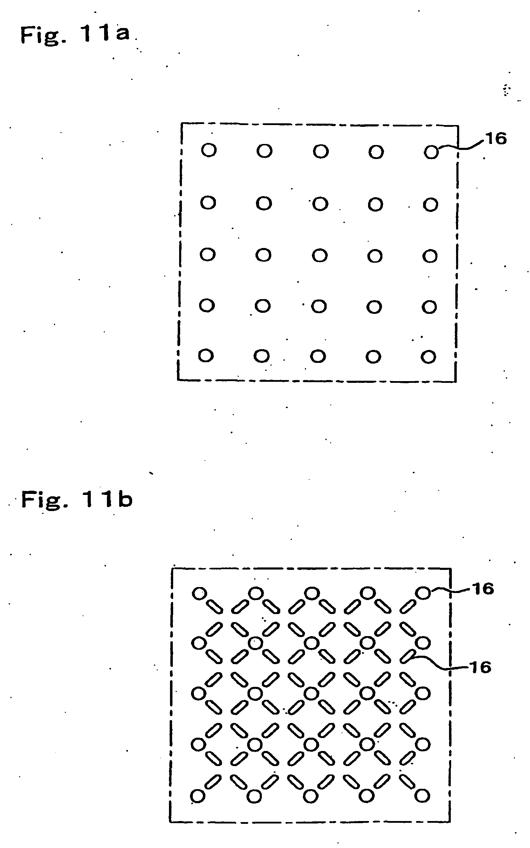

The shape and the arrangement of the pins 122, 124 and the through-holes 16 are selected according to the needs. The arrangement of the through-holes 16 in a backing layer 15 may be as shown in Fig.11a or Fig. 11 b.

The fibrous substrate 11 may be comprised of a non-woven polyester fabric of 300 g/m² where pile 12 is provided. Alternatively, the fibrous substrate 13 may be comprised of a non-woven polyester fabric of 300 9/m².

An embodiment noise absorbent carpet 10 is shown in Figs. 7 to 9, consisting of a fibrous substrate 11 with pile 12, a web-like adhesive layer 14, an internal fibrous substrate 13 and a backing layer 15. The noise absorbent carpet 10 is pressed such that an adhesive provided between the substrates 11 and 13 forms a web-like thin layer 14.

The apparatus 200 and 400 shown in Figs. 2, 3 and 5 produce a noise absorbent carpet 20 shown in Fig.10. The noise absorbent carpet may include a first fibrous substrate 13a made of a non-woven polyester fabric of 200 g/m² and a second fibrous substrate 13b made of a non-woven polyester fabric of 350 g/m².

Noises hitting the noise absorbent carpet from above pass through the carpet 20 from the piled fibrous substrate 11, the upper adhesive layer 14, the first fibrous substrate 13a, the lower adhesive layer 14, the second fibrous substrate 13b and the porous backing layer 15 to be effectively dissipated.

The filaments of the second fibrous substrate 13b may be shorter and thinner than the filaments of the first fibrous substrate 13a.

The backing layer 15 may be made of foamed styrene butadiene rubber (SBS) and may be provided with spikes 15a.

The above-described embodiments may be modified within the scope of the present invention. For example, more than two resin extruders may be used. The through-holes may be provided after the backing layer heat-bonding process.

## Claims

1. A method for making a noise absorbent carpet comprising a step of forming a backing layer (15) on a backing layer forming roll (113) by extruding a resin material onto the backing layer forming roll (113) by way of a resin extruder (114) provided relative to the backing layer forming roll (113) to form the backing layer (15) on the backing layer forming roll (113) and the concurrent steps of providing through-holes (16) in the backing layer (15) by inserting pins (113b) through the backing layer (15) whilst the backing layer (15) is on the backing layer forming roll (113) and heat-bonding a fibrous substrate (11) onto the backing layer (15) by way of a heat press roll (112) which presses the fibrous substrate (11) and the formed backing layer (15) against the backing layer forming roll (113).

2. The method of claim 1, further comprising a step of providing spikes (15a) on the backing layer (15) concurrently with said concurrent steps of providing the through-holes (16) in the backing layer (15) and heat-bonding the fibrous substrate (11) onto the backing layer (15).

3. The method of any preceding claim, wherein the step of forming the backing layer (15) comprises the steps of forming a first backing layer (15A), forming a second backing layer (15B) and laminating the first backing layer (15A) and the second backing layer (15B) and providing the through-holes (16) in the laminated first backing layer (15A) and the second backing layer (15B), and heat-bonding the fibrous substrate (11) onto the second backing layer (15B).

4. An apparatus for making a noise absorbent carpet comprising a backing layer forming roll (113), a resin extruder (114) provided relative to the backing layer forming roll (113) for extruding a resin material onto the backing layer forming roll (113) to form a backing layer (15) thereon, a pinned roll (113) provided to form through-holes (16) in the backing layer (15) when the backing layer (15) is on the backing layer forming roll (113), and a heat press roll (112) for heat-bonding a fibrous substrate (11) onto the backing layer (15) by pressing the fibrous substrate (11) and the backing layer (15) against the backing layer forming roll (113).

5. The apparatus of claim 4 , wherein the resin material is of a foamed continuous bubble structure.

6. The apparatus of claim 4 to 5, wherein the backing layer forming roll (113) is provided with spike forming depressions (113a).

7. The apparatus of claim 5, further comprising, between said resin extruder (114) and the pinned roll (113), a second resin extruder (116) for extruding over said backing layer (15A) a second resin material to form a second backing layer (15B).

8. The apparatus of claim 7, wherein the second resin material is of a foamed continuous bubble structure.

## Patentansprüche

1. Ein Verfahren zur Herstellung eines geräuschabsorbierenden Teppichs, das Folgendes beinhaltet: einen Schritt des Bildens einer Rückenschicht (15) auf einer Rückenschichtbildungswalze (113) durch das Extrudieren eines Harzmaterials auf die Rückenschichtbildungswalze (113) mittels eines Harzextruders (114), der relativ zu der Rückenschichtbildungswalze (113) bereitgestellt ist, um die Rückenschicht (15) auf der Rückenschichtbildungswalze (113) zu bilden, und die simultanen Schritte des Bereitstellens von Durchgangslöchern (16) in der Rückenschicht (15) durch das Einführen von Stiften (113b) durch die Rückenschicht (15), während sich die Rückenschicht (15) auf der Rückenschichtbildungswalze (113) befindet, und des Heißklebens eines Fasersubstrats (11) auf die Rückenschicht (15) mittels einer Heißpresswalze (112), die das Fasersubstrat (11) und die gebildete Rückenschicht (15) gegen die Rückenschichtbildungswalze (113) presst.

2. Verfahren gemäß Anspruch 1, das ferner einen Schritt des Bereitstellens von Dornen (15a) auf der Rückenschicht (15) simultan mit den simultanen Schritten des Bereitstellens der Durchgangslöcher (16) in der Rückenschicht (15) und des Heißklebens des Fasersubstrats (11) auf die Rückenschicht (15) beinhaltet.

3. Verfahren gemäß einem der vorhergehenden Ansprüche, wobei der Schritt des Bildens der Rückenschicht (15) die Schritte des Bildens einer ersten Rückenschicht (15A), des Bildens einer zweiten Rückenschicht (15B) und des Laminierens der ersten Rückenschicht (15A) und der zweiten Rückenschicht (15B) und des Bereitstellens der Durchgangslöcher (16) in der laminierten ersten Rückenschicht (15A) und der zweiten Rückenschicht (15B) und des Heißklebens des Fasersubstrats (11) auf die zweite Rückenschicht (15B) beinhaltet.

4. Ein Gerät zur Herstellung eines geräuschabsorbierenden Teppichs, das Folgendes beinhaltet: eine Rückenschichtbildungswalze (113), einen Harzextruder (114), der relativ zu der Rückenschichtbildungswalze (113) bereitgestellt ist, um ein Harzmaterial auf die Rückenschichtbildungswalze (113) zu extrudieren, um eine Rückenschicht (15) darauf zu bilden, eine verstiftete Walze (113), die bereitgestellt ist, um in der Rückenschicht (15) Durchgangslöcher (16) zu bilden, wenn sich die Rückenschicht (15) auf der Rückenschichtbildungswalze (113) befindet, und eine Heißpresswalze (112) zum Heißkleben eines Fasersubstrats (11) auf die Rückenschicht (15) durch das Pressen des Fasersubstrats (11) und der Rückenschicht (15) gegen die Rückenschichtbildungswalze (113).

5. Gerät gemäß Anspruch 4, wobei das Harzmaterial eine geschäumte kontinuierliche Blasenstruktur aufweist.

6. Gerät gemäß Anspruch 4 bis 5, wobei die Rückenschichtbildungswalze (113) mit dornenbildenden Vertiefungen (113a) versehen ist.

7. Gerät gemäß Anspruch 5, das ferner zwischen dem Harzextruder (114) und der verstifteten Walze (113) einen zweiten Harzextruder (116) zum Extrudieren eines zweiten Harzmaterials über der Rückenschicht (15A) beinhaltet, um eine zweite Rückenschicht (15B) zu bilden.

8. Gerät gemäß Anspruch 7, wobei das zweite Harzmaterial eine geschäumte kontinuierliche Blasenstruktur aufweist.

## Revendications

1. Un procédé destiné à réaliser un tapis insonorisant comprenant une étape consistant à former une couche formant dossier (15) sur un rouleau de formation de couche formant dossier (113) en extrudant un matériau résineux sur le rouleau de formation de couche formant dossier (113) à l'aide d'une extrudeuse à résine (114) prévue dans une position relative par rapport au rouleau de formation de couche formant dossier (113) afin de former la couche formant dossier (15) sur le rouleau de formation de couche formant dossier (113) et les étapes simultanées consistant à pratiquer des trous débouchants (16) dans la couche formant dossier (15) en insérant des tiges (113b) à travers la couche formant dossier (15) alors que la couche formant dossier (15) se trouve sur le rouleau de formation de couche formant dossier (113) et à thermosouder un substrat fibreux (11) sur la couche formant dossier (15) à l'aide d'un rouleau compresseur à chaud (112) qui presse le substrat fibreux (11) et la couche formant dossier (15) ayant été formée contre le rouleau de formation de couche formant dossier (113).

2. Le procédé de la revendication 1, comprenant en outre une étape consistant à prévoir des pointes (15a) sur la couche formant dossier (15) de façon simultanée avec lesdites étapes simultanées consistant à pratiquer des trous débouchants (16) dans la couche formant dossier (15) et à thermosouder le substrat fibreux (11) sur la couche formant dossier (15).

3. Le procédé de n'importe quelle revendication précédente, dans lequel l'étape consistant à former la couche formant dossier (15) comprend les étapes consistant à former une première couche formant dossier (15A), à former une deuxième couche formant dossier (15B), à laminer la première couche formant dossier (15A) et la seconde couche formant dossier (15B), à pratiquer les trous débouchants (16) dans les première couche formant dossier (15A) et deuxième couche formant dossier (15B) laminées, et à thermosouder le substrat fibreux (11) sur la deuxième couche formant dossier (15B).

4. Un appareil destiné à réaliser un tapis insonorisant comprenant un rouleau de formation de couche formant dossier (113), une extrudeuse à résine (114) prévue dans une position relative au rouleau de formation de couche formant dossier (113) destinée à extruder un matériau résineux sur le rouleau de formation de couche formant dossier (113) afin de former une couche formant dossier (15) sur celui-ci, un rouleau à tiges (113) prévu pour former des trous débouchants (16) dans la couche formant dossier (15) lorsque la couche formant dossier (15) se trouve sur le rouleau de formation de couche formant dossier (113), et un rouleau compresseur à chaud (112) destiné à thermosouder un substrat fibreux (11) sur la couche formant dossier (15) en pressant le substrat fibreux (11) et la couche formant dossier (15) contre le rouleau de formation de couche formant dossier (113).

5. L'appareil de la revendication 4, dans lequel le matériau résineux est constitué d'une structure à bulles continue alvéolaire.

6. L'appareil des revendications 4 à 5, dans lequel le rouleau de formation de couche formant dossier (113) est muni de creux de formation de pointes (113a).

7. L'appareil de la revendication 5, comprenant en outre, entre ladite extrudeuse à résine (114) et le rouleau à tiges (113), une deuxième extrudeuse à résine (116) destinée à extruder pardessus ladite couche formant dossier (15A) un deuxième matériau résineux afin de former une deuxième couche formant dossier (15B).

8. L'appareil de la revendication 7, dans lequel le deuxième matériau résineux est constitué d'une structure à bulles continue alvéolaire.
